# EUROPÄISCHE PATENTSCHRIFT

(11) **EP 0 974 496 B1**
(45) Veröffentlichungstag und Bekanntmachung des Hinweises auf die Patenterteilung: **23.07.2003**
(21) Anmeldenummer: 99110067.8
(22) Anmeldetag: 22.05.1999
(51) Int. Cl.: B60R 21/04

(54) **Radhaus-Polsterkörper für den Innenraum eines Kraftwagens**
Wheel arch lining element for a motor car interior compartment
Revêtement-Corps rembourré pour l'habitacle de voitures

(30) Priorität: 20.07.1998 DE 19832522
(43) Veröffentlichungstag der Anmeldung: 26.01.2000
(73) Patentinhaber: GRAMMER Automotive GmbH, 92224 Amberg (DE)
(72) Erfinder: Schürer, Wulf, 45966 Gladbeck (DE); Norbisrath, Klaus, 42489 Wülfrath (DE); Kruck, Berthold, 40764 Langenfeld (DE)
(74) Vertreter: Patentanwälte Ostriga & Sonnet

(56) Entgegenhaltungen:
- DE-A- 19 515 851
- DE-C- 19 528 627
- US-A- 5 553 887
- US-A- 5 678 853

## Beschreibung

Die Erfindung betrifft einen Radhaus-Polsterkörper für den Innenraum eines Kraftwagens entsprechend dem Oberbegriff des Anspruchs 1. Ein derartiger Radhaus-Polsterkörper ist durch offenkundige Vorbenutzung bekanntgeworden.

Der bekannte Radhaus-Polsterkörper, eine Radhausverkleidung, bildet jeweils ein Zwischenstück zwischen der hinteren Türöffnung und der Fondsitzlehne. Der bekannte Radhaus-Polsterkörper übergreift einen Teil der Außenfläche des Radhauses mit einer gemuldeten Innenfläche einer etwa trog- bzw. wannenförmigen Aussparung, die der Aufnahme eines Airbag-Moduls dient, das zwischen dem Radhaus und der Innenfläche des Polsterkörpers angeordnet ist.

Das Airbag-Modul ist mittels zweier Halteelemente an einem aus Metalldrahtgitter gebogenen Polsterträger befestigt, der einer in der Schäumform hergestellten Schaumstoffpolsterung als Armierung dient. Der Polsterträger ist demnach allseitig von der Schaumstoffpolsterung umschlossen bzw. in letztere eingebettet.

Polsterträger und Schaumstoffpolsterung bilden gemeinsam einen nach außen offenen länglichen Austrittsspalt für den Airbag. Dabei ist ein die äußere Ansichtsfläche des Polsterkörpers bildender Bezugsstoff mit zwei einander gegenüberliegenden Randbereichen von außen durch den Austrittsspalt hindurch um einander entgegenweisende Randbereiche der Schaumstoffpolsterung herum nach innen geführt und an einander entgegengesetzten Bereichen der gemuldeten Innenfläche befestigt.

Die gemuldete Innenfläche des Radhaus-Polsterkörpers ist von einem futterstoffähnlichen Textilgewebe gebildet bzw. begrenzt, an dessen der gemuldeten Innenfläche abgewandten erhabenen Außenfläche die Schaumstoffpolsterung angeschäumt ist.

Dem Austrittsspalt benachbarte Randbereiche des futterstoffartigen Textilgewebes dienen der vorerwähnten Befestigung des Bezugsstoffs an der gemuldeten Innenfläche. Die erwähnten beiden Randbereiche des Bezugsstoffs sind bei dem offenkundig vorbekannten Radhaus-Polsterkörper im Bereich des Austrittsspalts mittels einer eine Sollbruchstelle bildenden Naht aneinander befestigt. Derartige Sollbruch-Nähte sind in Verbindung mit Airbag-Module aufnehmenden Kraftfahrzeugsitzen beispielsweise durch die DE 196 33 034 A1 bekannt.

Der bekannte Radhaus-Polsterkörper ist hinsichtlich seiner Funktion, insbesondere für den Fall der Auslösung des Airbags, kaum zu beanstanden. Insbesondere wurde bei der Konzeption des bekannten Radhaus-Polsterkörpers vermieden, daß beim Auslösen des Airbags Teile der Schaumstoffpolsterung nach außen mitgerissen werden, da die durch den Austrittsspalt hindurchgeführten Bezugsstoff-Randbereiche und das sich daran anschließende futterstoffartige Textilgewebe die Schaumstoffpolsterung von dem sich aufblähenden Airbag trennen.

Der durch offenkundige Vorbenutzung bekannte Radhaus-Polsterkörper wird jedoch insbesondere wegen seiner aufwendigen Herstellungsweise als nachteilig empfunden, da der Polsterträger, das Metalldrahtgitter also, sorgfältig in der Schäumform positioniert werden muß, um eine einwandfreie und fertigungsidentische Herstellung der Schaumstoffpolsterung zu gewährleisten.

Hinzu kommt, daß die Schaumstoffpolsterung nach ihrer Entnahme aus der Schäumform zunächst noch einen sehr fragilen Körper bildet, welcher erst nach cirka 20 Stunden Lagerzeit annähernd seine vorgesehene Festigkeit erhält. Bis dahin muß die Handhabung der Schaumstoffpolsterung äußerst sorgfältig erfolgen, zumal diese die Metalldrahtgitter-Bewehrung enthält, welche die noch nicht ausgehärtete Schaumstruktur bei der Handhabung des Körpers nicht unerheblich mechanisch belastet.

Ausgehend von dem durch offenkundige Vorbenutzung bekanntgewordenen Radhaus-Polsterkörper, liegt der Erfindung die Aufgabe zugrunde, den bekannten Radhaus-Polsterkörper so umzugestalten, daß dieser insbesondere eine einfachere Fertigung gestattet.

Diese Aufgabe wird in Verbindung mit den Merkmalen des Oberbegriffs des Anspruchs 1 erfindungsgemäß dadurch gelöst, daß der Polsterträger ein die gemuldete Innenfläche mindestens teilweise bildendes Formbauteil ist, daß sich die Schaumstoffpolsterung nur auf der Außenfläche des Polsterträgers abstützt, daß die Schaumstoffpolsterung aus mindestens einem Fertigschaumkörper besteht, und daß der Bezugsstoff mindestens mittelbar an der Innenfläche des Polsterträgers befestigt ist.

Entsprechend der Erfindung ist der Polsterträger ein die gemuldete Innenfläche mindestens teilweise bildendes Formbauteil. Der Polsterträger kann dabei eine durchgehend glatte Innenfläche aufweisen und/oder, wie beim offenkundig vorbenutzten Radhaus-Polsterkörper, mit einem futterstoffartigen Textilgewebe oder schließlich vom Bezugsstoff selbst ausgekleidet sein.

Im Unterschied zum Bekannten ist der erfindungsgemäße Polsterträger nicht von der Schaumstoffpolsterung umgeben, vielmehr besteht die Schaumstoffpolsterung aus mindestens einem Fertigschaumkörper, welcher an der der Innenfläche des Polsterträgers abgewandten Außenfläche angelagert ist. Beim erfindungsgemäßen Radhaus-Polsterkörper bilden demnach der Polsterträger und die Schaumstoffpolsterung voneinander unabhängige Bauteile, so daß die Herstellung der separaten Schaumstoffpolsterung nicht durch die Existenz eines Polsterträgers in nachteiliger Weise beeinträchtigt werden kann.

Im Unterschied zum bekannten Radhaus-Polsterkörper wird erfindungsgemäß der Bezugsstoff mindestens mittelbar an der Innenfläche des Polsterträgers befestigt.

Entsprechend einer Erfindungsvariante kann der Polsterträger ein ein- oder mehrteiliges zusammenhängendes Bauteil sein.

Die Erfindung sieht für besondere Anwendungsfälle auch vor, daß der Polsterträger ein Stahlblech-Formbauteil, beispielsweise ein Stahlblech-Tiefziehbauteil, ist.

Eine bevorzugte erfindungsgemäße Ausführungsform besteht darin, daß der Polsterträger ein Kunststoffbauteil, wie z.B. ein Kunststofftiefziehteil oder ein Kunststoffspritzgußteil, ist.

Zur Halterung des Airbags-Moduls sieht die Erfindung zweckmäßig Haltelaschen vor, welche am Polsterträger befestigt sind.

Dabei ist das Airbag-Modul zwischen zwei Haltelaschen befestigt, welche in vorteilhafter Weise mittels einer Trägerlasche miteinander verbunden sind.

In weiterer Ausgestaltung der Erfindung bestehen die jeweilige Haltelasche und die Trägerlasche aus Stahlblech. Diese Bauteile sind beispielsweise an dem aus Kunststoff bestehenden Polsterträger befestigt.

Der sich an der erhabenen Außenfläche des Polsterträgers abstützende Fertigschaumkörper kann auch aus mehreren Schnittschaumkörpern zusammengesetzt sein.

Andererseits sieht die Erfindung vor, daß der Fertigschaumkörper aus einem stoffschlüssig zusammenhängenden Formschaumkörper besteht oder aus mehreren Formschaumkörpern zusammengesetzt ist. Die erfindungsgemäß vorgesehenen Formschaumkörper gestatten während der Aushärtezeit nach Entnahme aus der Schäumform eine verhältnismäßig einfache Handhabung, da die Schaumstruktur eines derartigen Fertigschaumkörpers im Unterschied zum Stand der Technik nicht durch eine starre Metallarmierung mechanisch belastet wird.

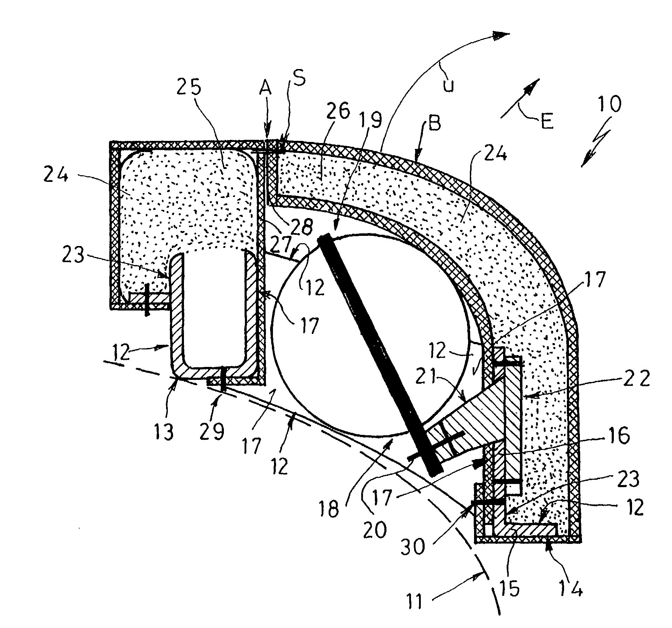

Die Zeichnung zeigt in schematischer Weise ein Ausführungsbeispiel eines erfindungsgemäßen Radhaus-Polsterkörpers. Die einzige Figur zeigt einen Querschnitt durch einen Radhaus-Polsterkörper.

In der Figur ist ein Radhaus-Polsterkörper insgesamt mit der Bezugsziffer 10 bezeichnet.

Der Radhaus-Polsterkörper 10 verkleidet ein lediglich mit Strichlinien angedeutetes Radhaus 11.

Ein Polsterträger 12 ist von einem einstückig stoffschlüssig zusammenhängenden Kunststoff-Formbauteil, z.B. von einem Kunststoffspritzgußteil, gebildet. Der Polsterträger 12 weist links in der Figur einen nach oben offenen etwa kanalartigen Querschnitt 13 und rechts in der Figur einen winkelförmigen Querschnitt 14 mit einem horizontalen Schenkel 15 und einem vertikalen Schenkel 16 auf.

Bei Betrachten des in der Figur gezeigten Querschnitts ist vorstellbar, daß der Polsterträger 12 eine gemuldete Innenfläche 17 mit einer trog- bzw. wannenförmig ausgebildeten Aussparung 18 darstellt, die der Aufnahme eines Airbag-Moduls 19 dient. Das Airbag-Modul 19 ist mittels einer Verschraubung 20 und mittels zweier Haltelaschen 21 (nur eine Haltelasche 21 ist gezeichnet), die durch eine Trägerlasche 22 miteinander verbunden sind, an dem vertikalen Schenkel 16 des winkelförmigen Querschnitts 14 des Polsterträgers 12 befestigt.

Auf die Außenfläche 23 des Polsterträgers 12 ist ein stoffschlüssig zusammenhängender einstückiger Fertigschaumkörper 24, und zwar ein Formschaumkörper, aufgesetzt, welcher zwei einander entgegenweisende Randbereiche 25, 26 bildet.

Ein in Kreuzschraffur gezeichneter Bezugsstoff B ist mit einander gegenüberliegenden Randbereichen 27, 28 von außen her durch einen Austrittsspalt A hindurch um die einander entgegenweisenden Randbereiche 25, 26 des Fertigschaumkörpers 24 herum nach innen zur Aussparung 18 hin geführt und an einander entgegengesetzten Bereichen der gemuldeten Innenfläche 17, und zwar an den Stellen 29 (am kanalartigen Querschnitt 13) und 30 (dort mit einer Überlappungsfuge am vertikalen Schenkel 16 des winkelförmigen Querschnitts 14), des Polterträgers 12 befestigt. Der Bezugsstoff B besorgt den Zusammenhalt von Polsterträger 12 und Fertigschaumkörper 24.

Die beiden einander gegenüberliegenden Randbereiche 25, 27 und 26, 28 sind mittels einer Sollbruchnaht S miteinander verbunden, so daß der Austrittsspalt A, wie in der Figur dargestellt, geschlossen ist.

Für den Fall, daß das Airbag-Modul 19 aktiviert wird, ist vorstellbar, daß der in nicht dargestellter Weise etwa in Richtung E austretende Airbag von innen gegen den Randbereich 26, 28 prallt. Dadurch wird die Sollbruchnaht S zerstört, so daß der Randbereich 26, 28 etwa entsprechend dem Pfeil u gemäß der Figur nach rechts schwenken kann, um damit den Austrittsweg für den Airbag nach außen freizugeben.

## Patentansprüche

1. Radhaus-Polsterkörper (10) für den Innenraum eines Kraftwagens, mit einer an einer gemuldeten Innenfläche (17) des Polsterkörpers (10) vorgesehenen, etwa trog- bzw. wannenförmig ausgebildeten Aussparung (18) zur Aufnahme eines zwischen dem Radhaus (11) und der Innenfläche (17) des Polsterkörpers (10) angeordneten Airbag-Moduls (19), welches mittels mindestens eines Halteelements (21, 22) an einem Polsterträger (12) für eine Schaumstoffpolsterung (24) befestigt ist, wobei Polsterträger (12) und Schaumstoffpolsterung (24) einen Austrittsspalt (A) für den Airbag bilden, wobei ein die äußere Ansichtsfläche des Polsterkörpers (10) bildender Bezugstoff (B) mit zwei einander gegenüberliegenden Randbereichen (27, 28) von außen durch den Austrittsspalt (A) hindurch um einander entgegenweisende Randbereiche (25, 26) der Schaumstoffpolsterung (24) herum nach innen geführt und an einander entgegengesetzten Bereichen (bei 29, 30) der gemuldeten Innenfläche (17) befestigt sind, und wobei die beiden Randbereiche (25, 26) des Bezugsstoffs (B) im Bereich des Austrittsspalts (A) mittels einer eine Sollbruchstelle bildenden Naht (S) aneinander befestigt sind, **dadurch gekennzeichnet, daß** der Polsterträger (12) ein die gemuldete Innenfläche (17) mindestens teilweise bildendes Formbauteil ist, daß sich die Schaumstoffpolsterung (24) auf der Außenfläche (23) des Polsterträgers (12) abstützt, daß die Schaumstoffpolsterung aus mindestens einem Fertigschaumkörper (24) besteht, und daß der Bezugsstoff (B) mindestens mittelbar an der Innenfläche (17) des Polsterträgers (12) befestigt ist.

2. Radhaus-Polsterkörper nach Anspruch 1, **dadurch gekennzeichnet, daß** der Polsterträger (12) ein ein- oder mehrteiliges zusammenhängendes Bauteil ist.

3. Radhaus-Polsterkörper nach Anspruch 1 oder nach Anspruch 2, **dadurch gekennzeichnet, daß** der Polsterträger ein Stahlblech-Tiefziehbauteil ist.

4. Radhaus-Polsterkörper nach Anspruch 1 oder nach Anspruch 2, **dadurch gekennzeichnet, daß** der Polsterträger (12) ein Kunststofformteil, wie Kunststofftiefziehteil oder Kunststoffspritzgußteil, ist.

5. Radhaus-Polsterkörper nach einem der Ansprüche 1 bis 4, **dadurch gekennzeichnet, daß** an dem Polsterträger (12) Haltelaschen (21) zur Befestigung des Airbag-Moduls (19) angebracht sind.

6. Radhaus-Polsterkörper nach Anspruch 5, **dadurch gekennzeichnet, daß** das Airbag-Modul (19) zwischen zwei Haltelaschen (21) befestigt ist, und daß die beiden Haltelaschen (21) mittels einer Trägerlasche (22) miteinander verbunden sind.

7. Radhaus-Polsterkörper nach Anspruch 5 oder nach Anspruch 6, **dadurch gekennzeichnet, daß** die jeweilige Haltelasche (19) und die Trägerlasche (22) aus Stahlblech bestehen.

8. Radhaus-Polsterkörper nach einem der Ansprüche 1 bis 7, **dadurch gekennzeichnet, daß** der Fertigschaumkörper aus mehreren Schnittschaumkörpern zusammengesetzt ist.

9. Radhaus-Polsterkörper nach einem der Ansprüche 1 bis 7, **dadurch gekennzeichnet, daß** der Fertigschaumkörper (24) aus einem stoffschlüssig zusammenhängenden Formschaumkörper besteht oder aus mehreren Formschaumkörpern zusammengesetzt ist.

## Claims

1. Wheel-arch cushion body (10) for the interior of a motor vehicle, with an approximately trough- or tub-shaped cavity (18) provided at a recessed inner surface (17) of the cushion body (10) and intended for receiving an air-bag module (19) arranged between the wheel arch (11) and the inner surface (17) of the cushion body (10) and fastened by means of at least one holding element (21, 22) to a cushion carrier (12) for foam cushioning (24), the cushion carrier (12) and foam cushioning (24) forming an exit gap (A) for the air bag, a covering material (B), which forms the outer visible surface of the cushion body (10), being passed, with two mutually facing border regions (27, 28), from outside inwards through the exit gap (A), around mutually facing edge regions (25, 26) of the foam cushioning (24) and fastened to mutually opposite regions (at 29, 30) of the recessed inner surface (17), and the two border regions (27, 28) of the covering material (B) being fastened to each other in the region of the exit gap (A) by means of a seam (S) forming a rupture point, **characterised in that** the cushion carrier (12) is a shaped component at least partly forming the recessed inner surface (17), **in that** the foam cushioning (24) is supported on the outer surface (23) of the cushion carrier (12), **in that** the foam cushioning consists of at least one prefabricated foam body (24), and **in that** the covering material (B) is fastened at least indirectly to the inner surface (17) of the cushion carrier (12).

2. Wheel-arch cushion body according to Claim 1, **characterised in that** the cushion body (12) is a coherent component of one or more parts.

3. Wheel-arch cushion body according to Claim 1 or according to Claim 2, **characterised in that** the cushion carrier is a deep-drawn sheet-steel component.

4. Wheel-arch cushion body according to Claim 1 or according to Claim 2, **characterised in that** the cushion body (12) is a shaped plastic part, such as a deep-drawn plastic part or injection-moulded plastic part.

5. Wheel-arch cushion body according to one of Claims 1 to 4, **characterised in that** holding brackets (21) for fastening the air-bag module (19) are attached to the cushion carrier (12).

6. Wheel-arch cushion body according to Claim 5, **characterised in that** the air-bag module (19) is fastened between two holding brackets (21), and **in that** the two holding brackets (21) are interconnected by means of a support plate (22).

7. Wheel-arch cushion body according to Claim 5 or according to Claim 6, **characterised in that** the respective holding bracket (21) and the support plate (22) consist of sheet steel.

8. Wheel-arch cushion body according to one of Claims 1 to 7, **characterised in that** the prefabricated foam body is composed of a plurality of cut foam bodies.

9. Wheel-arch cushion body according to one of Claims 1 to 7, **characterised in that** the prefabricated foam body (24) consists of a materially coherent shaped foam body or is composed of a plurality of shaped foam bodies.

## Revendications

1. Revêtement-corps (10) pour l'habitacle d'une voiture, avec un évidement (18) réalisé à peu près en forme d'auge ou de bac, prévu sur une face intérieure (17), formée en auge, du revêtement-corps (10), pour recevoir un module de sac pneumatique gonflable (19), disposé entre l'habitacle (11) et la face intérieure (17) du revêtement-corps (10), ce module étant fixé, à l'aide d'au moins un élément de maintien (21, 22), sur un support de rembourrage (12) pour un rembourrage en matière alvéolaire (24), le support de rembourrage (12) et le rembourrage en matériau alvéolaire (24) formant un intervalle de sortie (A) pour le sac pneumatique gonflable, un matériau de revêtement (B), formant la face extérieure visible du corps de rembourrage (10), étant guidé, par deux zones de bordure (27, 28) opposées l'une à l'autre, vers l'extérieur en passant dans l'intervalle de sortie (A), en passant autour de zones de bordure (25, 26), tournées en sens opposé l'une de l'autre, du rembourrage en matériau alvéolaire (24), fixées sur des zones (en 29, 30), mutuellement opposées, de la face intérieure (17) réalisée en auge, et où les deux zones de bordure (25, 26) dû matériau de revêtement (B) sont fixées l'une à l'autre dans la zone de l'intervalle de sortie (A), à l'aide d'un cordon (S) formant un point destiné à la rupture, **caractérisé par le fait que** le support de rembourrage (12) est un composant profilé formant au moins partiellement la face intérieure (17) en forme d'auge, **par le fait que** le rembourrage en matériau alvéolaire (24) prend appui sur la face extérieure (23) du support de rembourrage (12), **par le fait que** le rembourrage en matériau alvéolaire est formé d'au moins un corps alvéolaire achevé (24), et **par le fait que** le matériau de revêtement (B) est fixé, au moins indirectement, sur la face intérieure (17) du support de rembourrage (12).

2. Revêtement-corps selon la revendication 1, **caractérisé par le fait que** le support de rembourrage (12) est un composant rattaché, réalisé en une ou plusieurs parties.

3. Revêtement-corps selon la revendication 1 ou selon la revendication 2, **caractérisé par le fait que** le support de rembourrage est un composant obtenu par étirage profond à partir d'une tôle d'acier.

4. Revêtement-corps selon la revendication 1 ou la revendication 2, **caractérisé par le fait que** le support de rembourrage (12) est une pièce de forme en matière synthétique, telle qu'une pièce d'étirage profond en matière synthétique, ou bien une pièce moulée par injection en matière synthétique.

5. Revêtement-Corps selon l'une des revendications 1 à 4, **caractérisé par le fait que**, sur le support de rembourrage (12), sont montées des pattes de maintien (21) pour la fixation du module de sac pneumatique gonflable (19).

6. Revêtement-corps selon la revendication 5, **caractérisé par le fait que** le module de sac pneumatique gonflable (19) est fixé entre deux pattes de maintien (21), et **par le fait que** les deux pattes de maintien (21) sont reliées ensemble à l'aide d'une patte support (22).

7. Revêtement-corps selon la revendication 5 ou la revendication 6, **caractérisé par le fait que** la patte de maintien (19) respective et la patte support (22) sont réalisées en tôle d'acier.

8. Revêtement-corps selon l'une des revendications 1 à 7, **caractérisé par le fait que** le corps alvéolaire achevé est composé de plusieurs corps alvéolaires découpés.

9. Revêtement-corps selon l'une des revendications 1 à 7, **caractérisé par le fait que** le corps alvéolaire achevé (24) est formé d'un corps alvéolaire profilé rattaché par une liaison par le matériau, ou bien est composé de plusieurs corps de matériau alvéolaire.
